# EUROPÄISCHE PATENTSCHRIFT

(11) **EP 2 713 046 B1**
(45) Veröffentlichungstag und Bekanntmachung des Hinweises auf die Patenterteilung: **01.08.2018**
(21) Anmeldenummer: 12186104.1
(22) Anmeldetag: 26.09.2012
(51) Int. Cl.: F03D 7/02, F03D 9/10

(54) **Windkraftanlage**
Wind power assembly
Eolienne

(43) Veröffentlichungstag der Anmeldung: 02.04.2014
(73) Patentinhaber: Siemens Aktiengesellschaft, 80333 München (DE)
(72) Erfinder: Deicke, Matthias, 31311 Uetze / Schwüblingsen (DE)

(56) Entgegenhaltungen:
- DE-A1-102009 017 028
- DE-A1-102009 018 361
- DE-A1-102010 005 286
- US-A1- 2006 163 882
- US-A1- 2008 143 110
- US-A1- 2010 061 852
- US-A1- 2010 259 045
- US-B1- 7 218 012

## Beschreibung

Die Erfindung betrifft eine Windkraftanlage.

Eine Windkraftanlage weist Subsysteme (Untersysteme) auf, welche mit Energie zu versorgen sind. Der Betrieb eines oder einer Vielzahl von Subsystemen ist beispielsweise auch in einem Störungsfall sicherzustellen.

DE 10 2010 005 286 A1 beschreibt eine Windenergieanlage, aufweisend ein Pitchsystem. Das Pitchsystem wird aus einer Nabenleistungsquelle gespeist.

US 2008 / 0143 110 A1 beschreibt eine Windturbine mit einen Pitchsystem. Das Pitchsystem wird mit einem zusätzlichen Generator mit elektrischer Energie versorgt.

DE 10 2009 018 361 A1 beschreibt eine Anordnung zur Pitchwinkel-Verstellung mindestens eines Rotorblattes und einer Maschine, insbesondere eine Windkraftanlage.

US 2010/0259045 A1 beschreibt eine Windenergieanlage mit einem Pitchsystem. Das Pitchsystem wird von einem Generator gespeist.

US 7, 218, 012 B1 beschreibt eine Windenergieanlage mit einem elektrischen Pitchsystem, wobei die elektrische Energie für das Pitchsystem drahtlos übertragen wird.

US 2006 / 0163882 A1 offenbart eine Windkraftanlage mit einem Pitchsystem, wobei das Pitchsystem aus dem Umrichter der windkraftanlage gespeist wird.

US 2010/ 0061 852 A1 offenbart ebenfalls eine Windkraftanlage mit einem Pitchsystem, wobei mit einem weiteren aktorisch wirkenden Energieversorgungssystem über eine Batterie das Pitchsystem versorgt wird.

Eine Aufgabe der Erfindung ist es eine Windkraftanlage anzugeben, bei welcher die Energieversorgung eines Subsystems verbessert ist.

Die Lösung der Aufgabe gelingt beispielsweise bei einer Windkraftanlage nach Anspruch 1.

Eine Windkraftanlage weist eine Vielzahl von Energieverbrauchern (Untersysteme) auf, die beispielsweise auch während eines längeren Netzausfalls gesichert mit Energie zu versorgen sind. Hierzu zählen zum Beispiel eine Öl-Pumpe, eine Heizung, ein Kommunikationssystem (insbesondere ein Buskommunikationssystem), ein Pitch-System, ein Yaw-System oder auch ein Bremssystem. Wichtig ist eine sichere Energieversorgung insbesondere für sicherheitsrelevante Systeme. Zu diesen zählen die obig aufgeführten Systeme wie Kommunikationssystem, Pitch-System, Yaw-System oder Bremssystem.

Um Sicherzustellen, dass eine windkraftanlage unter vorzugsweise allen Bedingungen und Betriebszuständen sicher gestoppt werden kann, ist in einer Ausgestaltung die Windkraftanlage diese mit mehreren unabhängigen Bremssystemen ausgestattet. Eines dieser unabhängigen Bremssysteme kann der Pitch sein bzw. sind die Pitch-Systeme der Rotorblätter. Diese Bremssysteme sind derart ausgestaltet, dass diese auch im Falle eines Fehlers und/oder im Fall eines Energieausfalls, zum Beispiel hervorgerufen durch einen Netzfehler, funktionieren.

Die Windkraftanlage ist derart auszugestalten, dass beispielsweise durch die Bereitstellung eines Energiespeichers ein Funktionieren eines Bremssystems erreicht werden kann. Das Bremssystem ist damit unabhängig, da es über einen Energiespeicher betreibbar ist. Das Pitch-System kann als ein unabhängiges Bremssystem fungieren.

Es ist vorteilhaft eine Windkraftanlage derart auszubilden, dass diese bei einem Netzausfall oder einer anderen Störung eine Energieversorgung von Verbrauchern der Windkraftanlage unter Nutzung von Energiequellen der Windkraftanlage sicherstellt. In einer Ausgestaltung der Windkraftanlage wird beispielsweise der Energiespeicher für das unabhängige Bremssystem (insbesondere das Pitch-System) durch den Einbau zusätzlicher Komponenten in die Windkraftanlage realisiert. Je nach Ausführungsform des Bremssystems kann es sich hierbei beispielsweise um folgende Komponenten handeln:
- einen Hydraulikspeicher;
- einen Federspeicher;
- einen Ultra-Cap;
- einen Akkumulator;
- eine Bleibatterie;
- einen Schwungmassenspeicher;
- etc.

Diese Energiespeicher benötigen natürlich einen großen Einbauraum in der Windkraftanlage und stellen auch einen Kostenfaktor dar. Befindet sich einer dieser Energiespeicher in der Windkraftanlage, so ist dieser auch zu warten, was entsprechende Kosten verursacht. Eine Anforderung die bei Windkraftanlagen gestellt werden kann, ist auch eine hohe Lebensdauer. Eine geforderte Lebensdauer kann z.B. 20 Jahre sein. Energiespeicher sind demnach entsprechend auszulegen.

Bezüglich allgemeiner Verbraucher der Windkraftanlage (diese stellen Untersysteme der Windkraftanlage dar) wie Heizungen, Öl-Pumpen, Wasser-Pumpen oder ähnlichem, kann die Energieversorgung über das normale Energieversorgungsnetz sichergestellt werden. Dies stellt insbesondere den Regelfall dar. Das normale Energieversorgungsnetz (Netz) stellt die Betriebsspannung sicher und ist im störungsfreien Betrieb der Windkraftanlage unabhängig von der elektrischen Energie, welche mit der Windkraftanlage erzeugt wird. Dies bedeutet beispielsweise, dass die Heizung nur dann funktioniert, wenn das Netz vorhanden ist. Andere Verbraucher, die nicht sicherheitsrelevant aber funktionsrelevant sind (unter Umständen eine Öl-Pumpe) können vorteilhaft auch mechanisch angetrieben werden oder es wird durch die Einführung von Sondermaßnahmen sichergestellt, dass die Funktion des jeweiligen Untersystems (Subsystem) auch während eines Trudelbetriebes ohne Netzversorgung sichergestellt werden kann. Auch derartige Maßnahmen können hohe Investitionskosten oder einen erhöhten Wartungsaufwand verursachen.

In einer Ausgestaltung der Windkraftanlage wird bei einem Netzausfall oder einer anderen Störung zumindest ein bereits im System befindlicher Energiespeicher zur Versorgung zumindest eines Untersystems verwendet. Ein Beispiel hierfür ist das Brems-System bzw. das Pitch-System. Durch die Verwendung eines bereits vorhandenen Energiespeichers kann die Energieversorgung von wichtigen bzw. sicherheitsrelevanten Untersystemen, welche auch als Verbraucher bezeichnet werden können, sichergestellt werden.

In einer Ausgestaltung der Windkraftanlage, welche einen Generator und ein Untersystem aufweist, ist das Untersystem (Subsystem) mit einer Energiequelle energetisch verbunden. Diese Energiequelle ist insbesondere in einem störungsfreien Betrieb der Windkraftanlage aktiv. Dies bedeutet, dass diese Energiequelle an der Erzeugung elektrischer Energie durch die Windkraftanlage beteiligt ist. Beispiele für eine derartige Energiequelle sind rotierende Massen wie Wellen, Getriebe, ein Rotor des Generators, ein Zwischenkreiskondensator eines Stromrichters der Windkraftanlage usw. Der Stromrichter der Windkraftanlage wandelt die vom Generator erzeugte elektrisehe Energie in elektrischen Strom einer bestimmten Frequenz und Spannung um. Der Stromrichter ist beispielsweise ein Umrichter, welcher einen Gleichrichter, einen Zwischenkreis, einen Zwischenkreiskondensator und einen Wechselrichter aufweist.

Der Generator einer Windkraftanlage erzeugt insbesondere dann, wenn es sich um einen permanent erregten Generator handelt (also insbesondere eine permanent erregte Synchronmaschine), bereits bei geringer Drehzahl eine Spannung und eine abgreifbare Leistung. Diese Leistung kann vorteilhaft an mehreren Stellen des Hauptantriebssystems zur Speisung von Energieverbraucher insbesondere eines Bremssystem-Energiespeichers verwendet werden. Damit kann bei geeigneter Ausführung sichergestellt werden, dass die Verbraucher auch bei nicht vorhandenem elektrischem Netz mit Energie versorgt werden. Auch eine Remanenz des Rotoreisens kann ausreichen um bei einem Generator der keine Permanentmagnete aufweist eine Spannungsinduktion in Statorwicklungen zu erreichen. Das Hauptantriebssystem weist insbesondere einen Generator und einen an diesen angeschlossenen Stromrichter auf.

Mit einer vorteilhaften Ausgestaltung der Windkraftanlage kann beispielsweise folgendes erreicht werden:
- keine zusätzlichen Energiespeicher;
- keine Wartung der Energiespeicher;
- eine Erhöhung der Zuverlässigkeit;
- ein geringerer Platzbedarf in einer Gondel der Windkraftanlage;
- keine oder eine reduzierte Wartung von Komponenten der Windkraftanlage und/oder
- geringere Kosten.

In einer Ausgestaltung der Windkraftanlage ist die Energiequelle für das Untersystem wie z.B. ein Bremssystem bzw. eine Pitch-System ein mechanischer Energiespeicher. Rotierende Massen sind mechanische Energiespeicher. So kann der Hauptantriebsstrang über seine rotierenden Massen selbst als Energiespeicher für Verbraucher, insbesondere für das Bremssystem dienen.
In einer Ausgestaltung der Windkraftanlage weist der Generator einen Abgriff an einer Wicklung des Stators auf. Mittels des Abgriffs kann elektrische Energie entnommen werden. Hierzu werden die in jedem elektrischen Generator vorhandenen Wicklungen abgegriffen.

In einer Ausgestaltung der Windkraftanlage nach der Erfindung weist der Generator zumindest eine Hilfswicklung auf. Die Hilfswicklung ist eine zu den Statorwicklungen hinzukommende zusätzliche Wicklung, welche zur Erzeugung von Hilfsenergie dient. Die Statorwicklungen an sich sind zur Erzeugung der in ein Stromnetz einzuspeisenden Energie vorgesehen. Der Generator wird schon mit einer Hilfswicklung gefertigt, so dass sich Zusatzkosten zur Erzeugung von Hilfsenergie in Grenzen halten. Diese gilt auch für die schon beschriebenen Abgriffe, mit denen der Generator angezapft werden kann.
In einer Ausgestaltung der Windkraftanlage ist ein Hilfsgenerator vorgesehen. Der Hilfsgenerator dient zur Erzeugung elektrischer Energie für Untersysteme, damit diese mit Hilfsenergie versorgt werden können. Der Hilfsgenerator ist beispielsweise ein Außenläufer, welcher sich am Umfang einer Welle befindet. Die Welle stellt beispielsweise eine mechanische Kopplung zwischen den Rotorblättern und einem Getriebe her; oder auch eine mechanische Kopplung zwischen den Rotorblättern der Windkraftanlage und dem Generator, bei einer direktangetriebenen Windkraftanlage ohne Getriebe; oder auch eine mechanische Kopplung zwischen dem Getriebe und dem Generator bei einer Windkraftanlage mit Getriebe. Der Hilfsgenerator kann auch in das Getriebe integriert sein und dort entweder als ein Innenläufer oder als ein Außenläufer ausgeführt sein. In einer weiteren Ausgestaltung ist der Hilfsgenerator eine Art Linearmotor, welcher einen segmentbogenförmigen Luftspalt aufweist. Bei großen Radien ist es auch möglich einen Linearmotor als Hilfsgenerator einzusetzen, welcher einen ebenen Luftspaltbereich aufweist. Bei dem Linearmotor gibt es ein Sekundärteilsegment und ein Primärteilsegment. Das Sekundärteilsegment weist beispielsweise Permanentmagnete und/oder ein Eisenreaktionsteil auf und ist an einer rotierenden Masse befestigt. Das Primärteilsegment weist Wicklungen auf und ist stationär. Durch die Bewegung des Sekundärteils des Linearmotors wird Spannung im Primärteil induziert. Hieraus ergibt sich dann eine Hilfsenergie für Untersysteme.

In einer Ausgestaltung der Windkraftanlage ist die Energiequelle für Untersysteme ein elektrischer Energiespeicher. Als elektrischer Energiespeicher lässt sich beispielsweise ein Zwischenkreis eines Umrichters verwenden. Der Umrichter weist einen Zwischenkreiskondensator auf, welcher Energie speichert. Eine weitere Energiequelle ist die Induktivität der Wicklungen des Generators.

Die Erfindung wird nachfolgend beispielhaft durch Figuren näher beschrieben. Dabei zeigt:
- FIG 1: schematisch eine erste Übersicht über Komponenten, welche am Energiefluss einer Windkraftanlage beteiligt sind;
- FIG 2: schematisch eine zweite Übersicht über Komponenten, welche am Energiefluss einer Windkraftanlage beteiligt sind;
- FIG 3: schematisch eine dritte Übersicht über Komponenten, welche am Energiefluss einer Windkraftanlage beteiligt sind;
- FIG 4: schematisch eine vierte Übersicht über Komponenten, welche am Energiefluss einer Windkraftanlage beteiligt sind;
- FIG 5: schematisch eine fünfte Übersicht über Komponenten, welche am Energiefluss einer Windkraftanlage beteiligt sind;
- FIG 6: schematisch eine sechste Übersicht über Komponenten, welche am Energiefluss einer Windkraftanlage beteiligt sind;
- FIG 7: schematisch eine siebte Übersicht über Komponenten, welche am Energiefluss einer Windkraftanlage beteiligt sind;
- FIG 8: schematisch Komponenten eines Generators; und
- FIG 9: eine Windkraftanlage.

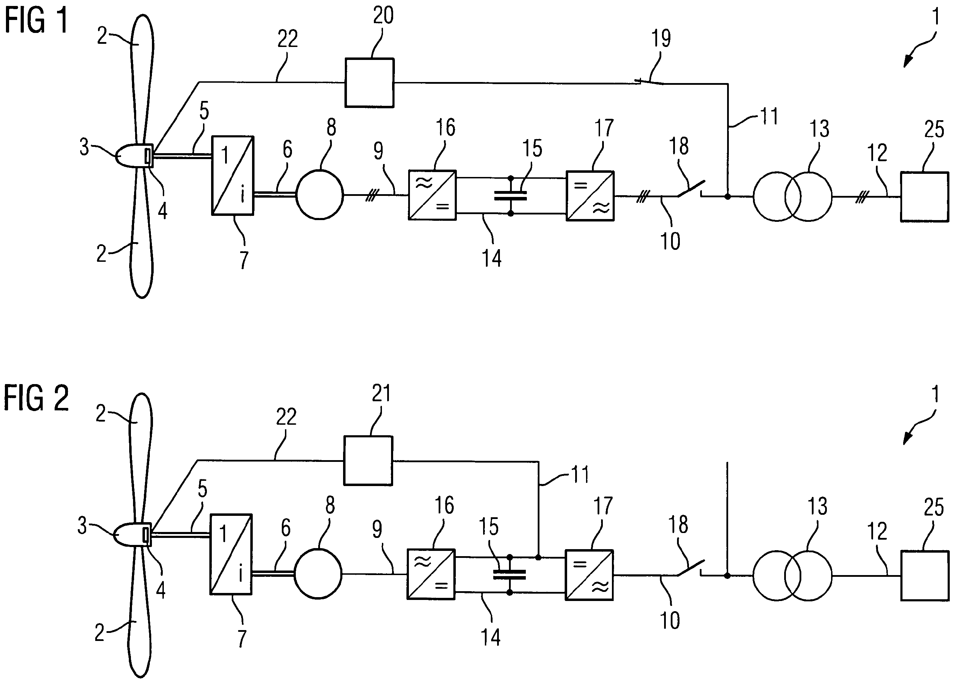

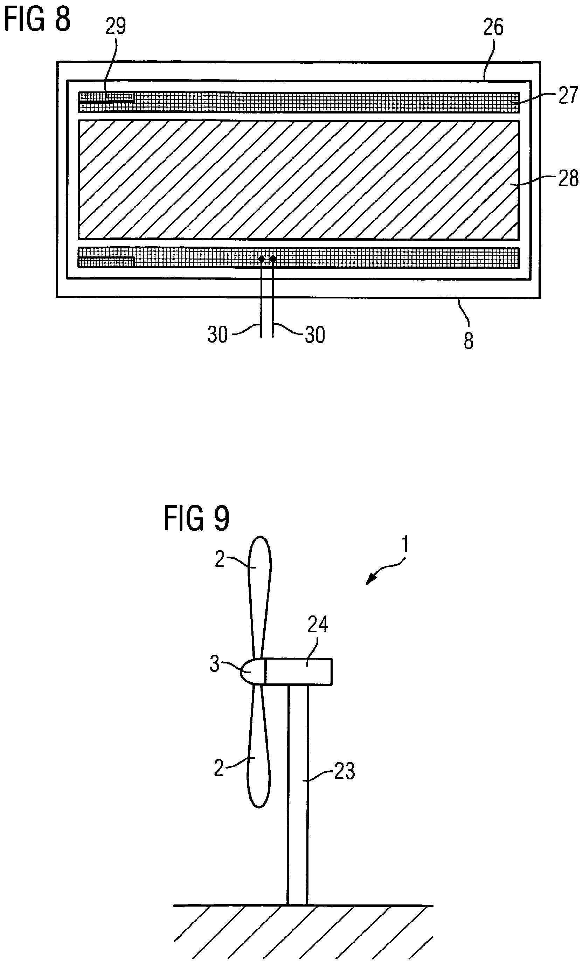

Die Darstellung gemäß FIG 1 zeigt schematisch ein Zusammenwirken verschiedener Elemente einer Windkraftanlage 1 gemäß Figur 9. Dargestellt ist eine Nabe 3, an welcher sich Rotorblätter 2 befinden. Über Wellen 5 und 6 sowie ein Getriebe 7 mit dem Übersetzungsverhältnis 1/i ist die Nabe 3 mit den Rotorblättern 2 mit einem Generator 8 mechanisch verbunden. Der Generator 8 ist beispielsweise eine fremderregte Synchronmaschine oder eine permanenterregte Synchronmaschine. Der Generator 8 ist mittels einer elektrischen Leitung 9, welche dreiphasig ausgeführt ist, mit einem Gleichrichter 16 elektrisch verbunden. Der Gleichrichter 16 speist einen Zwischenkreis 14, welcher einen Zwischenkreiskondensator 15 aufweist. Über den Zwischenkreis 14 ist elektrische Energie in einen Wechselrichter 17 einspeisbar. Der Gleichrichter 16, der Zwischenkreis 14 und der Wechselrichter 17 sind Teile eines Umrichters. Der Wechselrichter 17 ist über eine elektrische Leitung 10 mit einem Transformator 13 verbunden, welcher seinerseits über eine elektrische Leitung 12 mit einem Stromnetz 25 elektrisch verbunden ist. In der elektrischen Verbindung zwischen dem Wechselrichter 17 und dem Transformator 13 befindet sich in Reihenschaltung ein Schalter 18. Zwischen dem Schalter 18 und dem Transformator 13 befindet sich ein Abzweig mit der elektrischen Leitung 11. Die elektrische Leitung 11 ist zu einem Energiespeicher 20 geführt. Vor dem Anschluss der elektrischen Leitung 11 an den Energiespeicher 20 befindet sich in dieser elektrischen Leitung 11 ein Schalter 19 zum Schließen bzw. Unterbrechen der elektrischen Verbindung. Die Windkraftanlage weist ein Untersystem 4 auf. Dieses Untersystem 4 ist beispielsweise ein Bremssystem und/oder ein Pitch-System. Über eine Speiseleitung 22 wird das Untersystem 4 vom Energiespeicher 20 mit Energie versorgt. Mit einem System nach FIG 1 kann der Energiefluss einer Windkraftanlage 1 derart gestaltet werden, dass der separate Energiespeicher 20 (z.B. eine Batterie, ein Kondensator, ...) in einem Normalbetrieb der Windkraftanlage über das elektrische Netz 25 gespeist wird. Im Notfall, also dann wenn eine Störung vorliegt, können sicherheitsrelevante System über den Energiespeicher 20 mit Energie versorgt werden. In einem solchen Fall steht also eine Energieversorgung aus dem Netz 25 nicht zur Verfügung. Bezüglich des Pitch-Systems kann vorgesehen werden, dass der Energiespeicher 20 für die Pitches rotierend in der Rotornabe angeordnet sind, wobei dies in FIG 1 nicht dargestellt ist.

In den nachfolgenden Figuren werden für gleiche Elemente dieselben Bezugszeichen verwendet.

Die Darstellung gemäß FIG 2 zeigt eine weitere Variante, wie ein Untersystem 4 mit Energie versorgt werden kann. Gemäß Figur 2 wird ein Verbraucher 4 (z.B. ein Untersystem wie das Pitch-System) aus dem Zwischenkreis 14 des Umrichtersystems (mit dem Gleichrichter 16 und dem Wechselrichter 17) gespeist. Je nach Auslegung des Zwischenkreises (der hier auch als ein Energiespeicher für Subsysteme im Fehlerfall dient) können gegebenenfalls zusätzlich zu den sicherheitsrelevanten Systemen auch nicht sicherheitsrelevante Systeme aus diesem Energiespeicher versorgt werden. Ein Beispiel für nicht so sicherheitsrelevante Untersysteme sind die Heizung bzw. die Öl-Pumpen. Aus dem Zwischenkreis 14 ist Energie entnehmbar, wobei der Zwischenkreis insbesondere ein Spannungszwischenkreis ist. Benötigt ein Verbraucher keine Gleichspannung zur Energieversorgung sondern eine Wechselspannung bzw. einen Drehstrom, so ist ein Energiewandler 21 vorzusehen. Der Energiewandler 21 ist insbesondere ein Wechselrichter, welcher über eine elektrische Leitung 11 Energie aus dem Zwischenkreis 14 entnimmt und über eine elektrische Leitung 22 elektrische Energie an einen Verbraucher 4 weitergibt. Der Energiewandler 21 ist derart auslegbar, dass eine ausgegebene Spannung und/oder eine ausgegebenen Frequenz einstellbar, bzw. regelbar ist. Weiterhin kann bei entsprechender Auslegung des Verbrauchers auf den Energiewandler 21 verzichtet werden, was jedoch in Figur 2 nicht dargestellt ist.

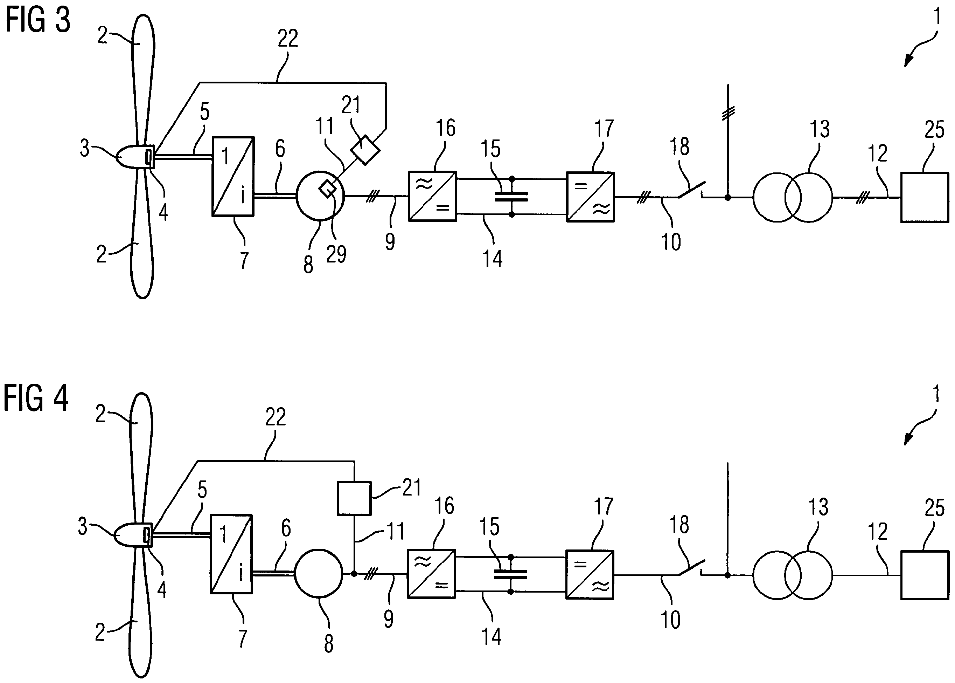

Die Darstellung gemäß FIG 3 zeigt erfindungsgemäss wie ein Untersystem 4 mit Energie versorgt werden kann. Es ist eine mögliche Realisierung gezeigt, bei welcher der Generator 8 eine Hilfswicklung 29 aufweist. Durch die Hilfswicklung 29 wird bei Rotation des Rotors eine Spannung erzeugt. Der Energiewandler 21 ist an die Hilfswicklung 29 angeschlossen. Bei dieser Variante wird der Zwischenkreis 14 eines Umrichters nicht benötigt. Der Energiewandler kann hier als Umrichter ausgelegt sein.
In einer nicht dargestellten Variante wird für den Energiewandler 21 für das Untersystem als Energiequelle sowohl der Zwischenkreis 14 wie auch die Hilfswicklung 29 genutzt. Auch eine zusätzliche Kombination mit nachfolgend weiter beschriebenen Lösungen ist möglich. Dies führt auch zu der Betrachtung, dass eventuelle Redundanzthemen zu beachten sind. Auch ist z.B. die Verwendung einer Hilfsmaschine anstelle der Hilfswicklung möglich.
Die Darstellung gemäß FIG 4 zeigt eine weitere Variante, wie ein Untersystem 4 mit Energie versorgt werden kann. Hierbei wird keine zusätzliche Hilfswicklung am Generator 8 angebracht, sondern es wird vielmehr die Hauptwicklung des Generators genutzt. Dies wird in der Figur 4 so dargestellt, dass der Anschluss des Energiewandlers an einer oder mehreren Phasenanschlüssen des Generators erfolgt. In einer weiteren Variante weist der Generator eine Anzapfung auf. Mittels der Anzapfung kann erreicht werden, dass die maximal zu erwartende Ausgangsspannung an der Anzapfung einer Wicklung geringer ist als die maximal zu erwartende Ausgangsspannung am elektrischen Phasenanschluss des Generators. Damit ist es z.B. möglich als Energiewandler 21 einen Typ einzusetzen, welcher bzgl. der maximal zulässigen Spannung kleiner dimensioniert ist als der Gleichrichter 16. Die Anzapfung der Generatorwicklung wirkt, sofern der Generator dreht. Es wird eine Leistung zur Verfügung gestellt, die zur Speisung der Verbraucher, insbesondere des Bremssystems, dient. Sollte der Generator nicht drehen, wird keine Leistung zur Verfügung gestellt. Dieses ist jedoch für ein Bremssystem dann nicht notwendig, da keine Bremsenergie benötigt wird. In dem Fall, dass der Zwischenkreis 14 des Umrichters zur Versorgung des Bremssystems dient (siehe Figur 2) steht die Energie dann zur Verfügung, wenn der Generator dreht. Zusätzlich können die Kondensatoren 15 des Zwischenkreises 14 als Puffer verwendet werden.

Ein Anschluss des Energiewandlers 21 für ein Untersystem am Generator hat den Vorteil, dass der Aufwand am bzw. im Generator 8 gering ist. Abhängig von der zulässigen Eingangsspannung der Untersysteme kann auch hier auf den dem Untersystem vorgeschalteten Energiewandler verzichtet werden. Der Energiewandler ist von Vorteil, wenn die Spannung der Hauptwicklung nicht so flexibel eingestellt werden kann wie beispielsweise die Spannung einer Hilfswicklung.

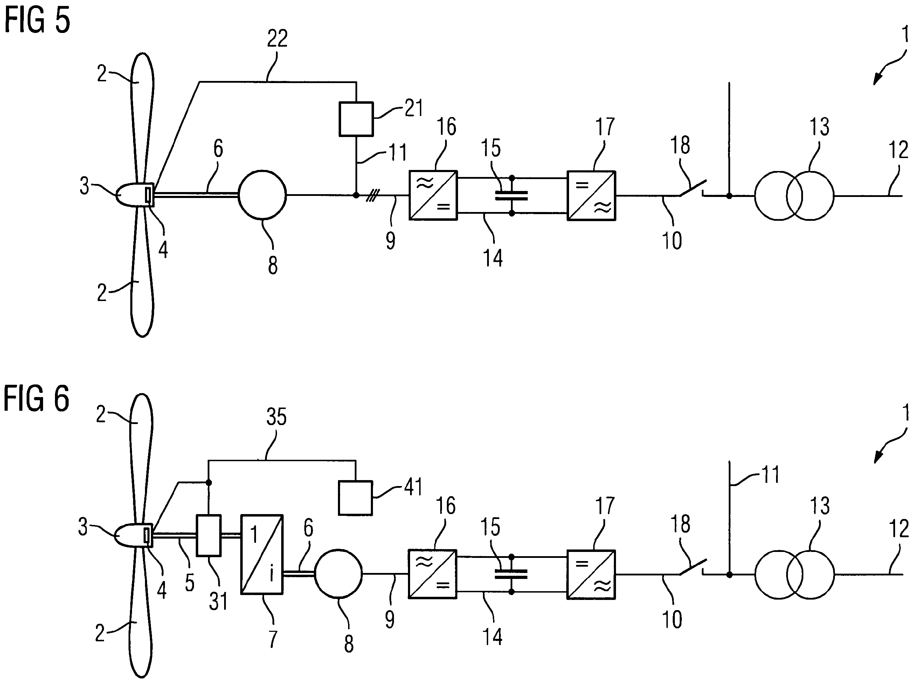

Die Darstellung gemäß FIG 5 zeigt eine weitere Variante, wie ein Untersystem 4 mit Energie versorgt werden kann. Dabei ist gezeigt, dass die Windkraftanlage auch einen direkt angetriebenen Generator 8 aufweisen kann. Auf ein Getriebe zwischen den Windrotor und dem Generatorrotor wird hier verzichtet. Dadurch werden Reibungsverluste reduziert, was dazu führt, dass sich der Rotor leichter dreht damit auch leichter Energie erzeugt werden kann. Dies ist insbesondere im Störungsfall wichtig, wenn durch die Bewegung des Rotors Hilfsenergie für ein sicherheitsrelevantes Untersystem zu erzeugen ist.

Die Darstellung gemäß FIG 6 zeigt eine weitere Variante, wie ein Untersystem 4 mit Energie versorgt werden kann. Dabei kann hier, wie auch in den vorangehend beschriebenen Varianten, das Untersystem auch in einem Teil der Windkraftanlage 1 sein, welches nicht rotiert. Bei dem Untersystem kann es sich also auch um ein System 4' handeln, welches fix in einer Gondel ähnlich dem Generator 8 positioniert ist. Die Darstellung gemäß FIG 6 zeigt einen Hilfsgenerator 31 auf der Hauptwelle 5, welcher über elektrische Anschlussleitungen 35 mit den Untersystemen 4 und 4' verbunden ist. Im Falle der Verwendung eines Hilfsgenerators 31 werden die rotierenden Massen des Hauptantriebsstranges als Energiespeicher zur Versorgung von Verbrauchern genutzt. Hierbei ist es auch denkbar, dass zum Beispiel auf der Hauptwelle elektrische Wicklungen angebracht werden, die auch im Falle eines Netzausfalls, das System (insbesondere ein Untersystem) unabhängig mit Energie versorgen.

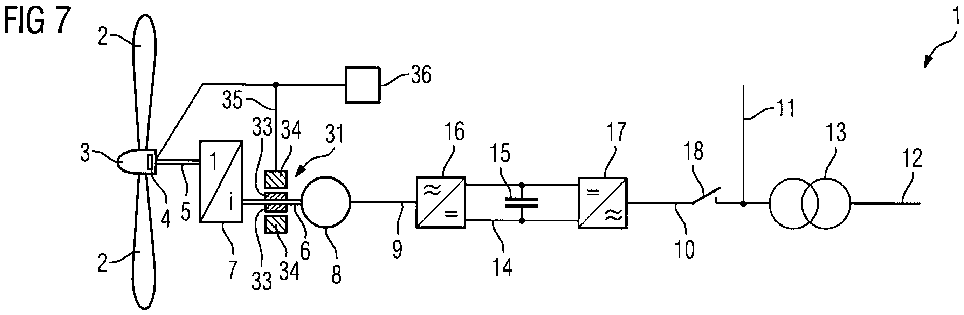

Die Darstellung gemäß FIG 7 zeigt eine weitere Variante, wie ein Untersystem 4 mit Energie versorgt werden kann. Der Hilfsgenerator 31, welcher einen Stator 34 und einen Rotor aufweist, ist mit der Welle 6 gekoppelt. Die Welle 6 weist an ihr befestigte Permanentmagnete 33 auf und dient als Rotor des Hilfsgenerators 31. Der Hilfsgenerator 31 versorgt die Untersysteme 4 und 36 über eine Anschlussleitung 35 mit elektrischer Energie.

Die Darstellung gemäß FIG 8 zeigt zum Verständnis schematisch Komponenten eines Generators 8. Gezeigt ist ein Stator 26 mit Statorwicklungen 27. Die Statorwicklungen 27 weisen eine Anzapfung 30 auf. Die regulären Anschlussleitungen des Generators sind nicht dargestellt. Neben den Statorwicklungen 27 weist der Stator auch eine Hilfswicklung 29 auf, wobei auch deren Anschlüsse nicht dargestellt sind.

Die Darstellung gemäß FIG 9 zeigt schematisch eine Windkraftanlage 1 mit einer auf einem Mast 23 befindlichen Gondel 24. An einer Nabe 3 sind die Roterblätter 2 befestigt.

## Patentansprüche

1. Windkraftanlage (1), welche einen Generator (8) und ein Untersystem (4) aufweist, wobei das Untersystem (4) mit einer Energiequelle (2, 5, 6, 7, 8, 14) energetisch verbunden ist, welche in einem störungsfreien Betrieb der Windkraftanlage (1) aktiv ist, wobei die Energiequelle ein mechanischer Energiespeicher ist,
wobei der Generator (8) einen Stator mit Statorwicklungen (27) und eine Hilfswicklung (29) aufweist und
die Hilfswicklung zur Energieversorgung des Untersystems (4) vorgesehen ist.

2. Windkraftanlage (1) nach Anspruch 1, wobei die Energiequelle (8) zusätzlich ein elektrischer Energiespeicher, insbesondere ein Zwischenkreis, ist.

3. Windkraftanlage (1) nach Anspruch 2, wobei der elektrische Energiespeicher ein Zwischenkreiskondensator (15) ist.

4. Windkraftanlage (1) nach Anspruch 2, wobei der elektrische Energiespeicher eine Induktivität (27) des Generators (8) ist.

## Claims

1. Wind power assembly (1), which has a generator (8) and a subsystem (4), wherein the subsystem (4) is energetically connected to an energy source (2, 5, 6, 7, 8, 14), which is active during interference-free operation of the wind power assembly (1), wherein the energy source is a mechanical energy store,
wherein the generator (8) has a stator with stator windings (27) and an auxiliary winding (29) and the auxiliary winding is provided to supply energy to the subsystem (4).

2. Wind power assembly (1) according to claim 1, wherein the energy source (8) is additionally an electrically energy store, in particular an intermediate circuit.

3. Wind power assembly (1) according to claim 2, wherein the electrical energy store is an intermediate circuit capacitor (15) .

4. Wind power assembly (1) according to claim 2, wherein the electrical energy store is an inductor (27) of the generator (8) .

## Revendications

1. Eolienne (1), qui a une génératrice (8) et un sous-système (4), le sous-système (4) étant relié énergétiquement à une source (2, 5, 6, 7, 8, 14) d'énergie, qui est active dans un fonctionnement sans perturbation de l'éolienne (9), la source d'énergie étant un accumulateur d'énergie mécanique, dans laquelle la génératrice (8) a un stator ayant des enroulements (27) statoriques et un enroulement (29) auxiliaire et l'enroulement auxiliaire est prévu pour alimenter le sous-système (4) en énergie.

2. Eolienne (1) suivant la revendication 1, dans laquelle la source (8) d'énergie est supplémentairement une source d'énergie électrique, notamment un circuit intermédiaire.

3. Eolienne (1) suivant la revendication 2, dans laquelle l'accumulateur d'énergie électrique est un condensateur (15) de circuit intermédiaire.

4. Eolienne (1) suivant la revendication 2, dans laquelle l'accumulateur d'énergie électrique est une inductance (27) de la génératrice (8).
